# EUROPEAN PATENT APPLICATION

(11) **EP 4 668 639 A1**
(43) Date of publication of application: **24.12.2025**
(21) Application number: 23922043.7
(22) Date of filing: 17.02.2023
(51) Int. Cl.: H04L 5/00

(54) **SIDELINK (SL) POSITIONING REFERENCE SIGNAL (PRS) RETRANSMISSION METHOD AND APPARATUS THEREFOR**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/076983
(87) International publication number: WO 2024/168912

(57) **Abstract**

The embodiments of the present disclosure disclose an SL PRS transmission method and an apparatus therefor, which can be applied in a communications system. The method comprises: after sending an SL PRS to a second device, retransmitting the SL PRS on the basis of or not on the basis of SL PRS feedback information of the second device. The solution of the present disclosure allows an SL PRS to support retransmission and feedback while providing a positioning service, ensuring transmission reliability and thereby improving communication performance.

## Description

### TECHNICAL FIELD

The present disclosure relates to the field of communication technology, and in particular to a method and apparatus for retransmitting a sidelink (SL) positioning reference signal (PRS).

### BACKGROUND

Terminal devices can communicate with each other via a sidelink (SL), for example, transmitting a sidelink positioning reference signal (SL PRS) for SL positioning. However, there is no consensus on whether retransmission of SL PRS should be supported.

### SUMMARY

Embodiments of the present disclosure provide a sidelink (SL) positioning reference signal (PRS) retransmission method and apparatus thereof, so that in SL PRS transmission, it is supported for a first device to retransmit the SL PRS after sending the SL PRS to a second device, thereby improving the communication performance of the SL positioning service.

In a first aspect, an embodiment of the present disclosure provides a sidelink (SL) positioning reference signal (PRS) retransmission method, which is performed by a first device. The method includes: after sending the SL PRS to a second device, retransmitting the SL PRS.

In some embodiments, retransmitting the SL PRS includes any one of: retransmitting the SL PRS according to SL PRS feedback information of the second device; and blindly retransmitting SL PRS to the second device a preset number of times.

In some embodiments, retransmitting the SL PRS includes: determining a resource allocation mode of the first device; in a case that the first device is in a resource allocation mode based on network scheduling, receiving a retransmission instruction signaling sent by the network device, and in a case that the retransmission instruction signaling instructs to retransmit the SL PRS, retransmitting the SL PRS by using transmission resources scheduled by a network; in a case that the first device is in an autonomous resource allocation mode, retransmitting the SL PRS by using transmission resources autonomously selected by the first device.

In some embodiments, retransmitting the SL PRS based on the SL PRS feedback information of the second device includes: in a case that the first device is in a resource allocation mode based on network scheduling, receiving SL PRS feedback information sent by the second device; and sending the SL PRS feedback information to the network device.

In some embodiments, sending the SL PRS feedback information to the network device includes: determining configuration information of a physical uplink control channel (PUCCH) by the first device for an SL grant of the SL PRS; and sending the SL PRS feedback information to the network device through the PUCCH.

In some embodiments, retransmitting the SL PRS based on the SL PRS feedback information of the second device includes: in a case that the first device is configured to enable an SL PRS feedback function, after sending the SL PRS, monitoring the SL PRS feedback information sent by the second device for the SL PRS; and receiving the SL PRS feedback information through the physical sidelink feedback channel (PSFCH).

In some embodiments, the method further includes: determining whether the first device enables the SL PRS feedback function according to feedback function configuration information sent by the network device or pre-configuration information of the first device.

In some embodiments, the method also includes any one of: determining the configuration information of the PSFCH for receiving SL PRS feedback information based on the configuration information of an SL PRS dedicated sending resource pool; determining the configuration information of the PSFCH for receiving SL PRS feedback information based on the configuration information of the SL data sending resource pool of the first device, where the configuration information of the SL data sending resource pool includes configuration information of a PSFCH for the SL PRS and configuration information of a PSFCH for SL data; determining that the configuration information of the PSFCH for receiving the SL PRS feedback information is configuration information of a PSFCH for receiving the SL data based on the configuration information of the SL data sending resource pool of the first device.

In some embodiments, the method further includes: sending sidelink control information (SCI) to the second device, where in a case that the first device is configured to enable the SL PRS feedback function, the SCI carries an indication instructing the second device to feed back feedback information.

In some embodiments, in a case that the SL PRS is sent to the second device in a group cast mode, the SCI carries feedback mode indication information, and the feedback mode indication information includes a positive-negative feedback mode and a negative-only feedback mode.

In some embodiments, the method further includes: for the negative-only feedback mode, determining an SL zone length based on the transmission distance range of the SL PRS; and determining a zone identifier based on the SL zone length.

In some embodiments, the method also includes: in a case that there are multiple second devices and a number of resources required by the multiple second devices is less than or equal to a number of PSFCH resources, selecting the positive-negative feedback mode or the negative-only feedback mode, and carrying the configuration information of the selected feedback mode in the SCI; in a case that there are multiple second devices and a number of resources required by the multiple second devices is greater than a number of PSFCH resources, carrying the configuration information of the negative-only feedback mode in the SCI.

In some embodiments, the method further includes at least one of: in response to receiving positive feedback information sent by the second device, not retransmitting the SL PRS; for the negative-only feedback mode, in response to not receiving negative feedback information sent by the second device, not retransmitting the SL PRS.

In some embodiments, retransmitting the SL PRS based on the SL PRS feedback information of the second device includes: in response to receiving negative feedback information sent by the second device, in a case that a number of PRS retransmissions does not reach the maximum number of SL PRS retransmissions, retransmitting the SL PRS.

In some embodiments, the method also includes any one of: in a case that the first device is in an autonomous resource allocation mode, determining the maximum number of SL PRS retransmissions based on configuration information of an SL data sending resource pool of the first device; determining the maximum number of SL PRS retransmissions based on the configuration information of the SL PRS configured grant.

In some embodiments, the method further includes: in a case that the first device is in an autonomous resource allocation mode, selecting a transmission resource for SL PRS retransmission; and determining a minimum time interval between any two transmission resources for SL PRS retransmission.

In some embodiments, determining the minimum time interval between any two transmission resources used for SL PRS retransmission includes any of the following: determining that the minimum time interval between any two transmission resources used for SL PRS retransmission is a time interval between an end position of a last symbol of transmission of the SL PRS and a start position of a first symbol of reception of a PSFCH; determining that the minimum time interval between any two transmission resources used for SL PRS retransmission is a time required for PSFCH reception and processing plus an SL PRS retransmission preparation time and a switching time for switching from sending to receiving or for switching from receiving to sending.

In some embodiments, the method further includes: in a case that the first device is in an autonomous resource allocation mode, and the first device is configured to enable the SL PRS feedback function, selecting a sending resource pool configured with a PSFCH.

In some embodiments, the method further includes: in a case that the first device is in an autonomous resource allocation mode, selecting a number of times for retransmissions from a maximum number of times for retransmission list indicated in the SL PRS resource pool configuration information; selecting one or more time-frequency resources for SL PRS retransmission based on the number of times for retransmission.

In a second aspect, an embodiment of the present disclosure provides a method for retransmitting a sidelink (SL) positioning reference signal (PRS), which is performed by a second device. The method includes: after receiving the SL PRS sent by the first device, receiving the SL PRS retransmitted by the first device.

In some embodiments, the method also includes: receiving sidelink control information (SCI) sent by the first device, where in a case that the first device is configured to enable the SL PRS feedback function, the SCI carries an indication instructing the second device to feed back feedback information; and in response to the indication, sending feedback information to the first device.

In some embodiments, the method further includes: in a case that the SL PRS is sent in a group cast mode, determining feedback mode indication information carried by the SCI; in response to the feedback mode indication information indicating a positive-negative feedback mode, if the SL PRS is successfully received, sending positive feedback information to the first device; if the SL PRS is not successfully received, sending negative feedback information to the first device.

In some embodiments, the method further includes: in a case that the SL PRS is sent in a unicast mode, if the SL PRS is successfully received, sending positive feedback information to the first device; if the SL PRS is not successfully received, sending negative feedback information to the first device.

In some embodiments, the method also includes: determining the feedback mode indication information carried by the SCI; in response to the feedback mode indication information indicating negative-only feedback mode, if the SL PRS is not successfully received, and when one of the following conditions is met, sending negative feedback information to the first device: a distance between the second device and the center position of the nearest zone is less than a transmission distance range indicated in the SCI; the SCI does not indicate the zone identifier and/or the transmission distance range; the location information of the second device is not available.

In a third aspect, an embodiment of the present disclosure provides an apparatus for retransmitting a sidelink (SL) positioning reference signal (PRS), which is applied to a first device. The apparatus includes a transceiver module, and the transceiver module is configured to: after sending the SL PRS to the second device, retransmit the SL PRS.

In a fourth aspect, an embodiment of the present disclosure provides an apparatus for retransmitting a sidelink (SL) positioning reference signal (PRS), which is applied to a second device. The apparatus includes a transceiver module, and the transceiver module is configured to: after receiving the SL PRS sent by the first device, receive the SL PRS retransmitted by the first device.

In a fifth aspect, an embodiment of the present disclosure provides a communication device, including: a transceiver, a memory and a processor, the processor is connected to the transceiver and the memory, and is configured to, by executing computer-executable instructions in the memory, control the wireless signal reception and transmission of the transceiver, and implement the method according to the embodiments of the first aspect or the embodiments of the second aspect of the present disclosure.

In a sixth aspect, an embodiment of the present disclosure provides a computer-readable storage medium for storing instructions, which, when executed, implement the method according to the embodiments of the first aspect or the embodiments of the second aspect of the present disclosure.

The embodiments of the present disclosure provide a sidelink (SL) positioning reference signal (PRS) retransmission method and apparatus thereof, and the first device can retransmit the SL PRS after sending the SL PRS to the second device. The scheme of the present disclosure enables the support of SL PRS retransmission and feedback thereof when providing positioning services, ensures transmission reliability, and thus enhances communication performance.

### BRIEF DESCRIPTION OF THE DRAWINGS

In order to more clearly illustrate the technical solutions in the embodiments of the present disclosure or the background technology, the drawings required for use in the embodiments of the present disclosure or the background technology will be described below.
Fig. 1 is a schematic diagram of the architecture of a communication system according to an embodiment of the present disclosure;
Fig. 2 is a flow chart of a method for retransmitting a sidelink (SL) positioning reference signal (PRS) according to an embodiment of the present disclosure;
Fig. 3 is a flow chart of a method for retransmitting a SL PRS according to an embodiment of the present disclosure;
Fig. 4 is a flow chart of a method for retransmitting a SL PRS according to an embodiment of the present disclosure;
Fig. 5 is a flow chart of a method for retransmitting a SL PRS according to an embodiment of the present disclosure;
Fig. 6 is a flow chart of a method for retransmitting a SL PRS according to an embodiment of the present disclosure;
Fig. 7 is a flow chart of a method for retransmitting a SL PRS according to an embodiment of the present disclosure;
Fig. 8 is a flow chart of a method for retransmitting a SL PRS according to an embodiment of the present disclosure;
Fig. 9 is a flow chart of a method for retransmitting a SL PRS according to an embodiment of the present disclosure;
Fig. 10 is a flow chart of a method for retransmitting a SL PRS according to an embodiment of the present disclosure;
Fig. 11 is a schematic diagram of interactions in a method for retransmitting the SL PRS according to an embodiment of the present disclosure;
Fig. 12 is a schematic structural diagram of an apparatus for retransmitting a SL PRS according to an embodiment of the present disclosure;
Fig. 13 is a schematic structural diagram of an apparatus for retransmitting a SL PRS according to an embodiment of the present disclosure;
Fig. 14 is a schematic structural diagram of a communication device according to an embodiment of the present disclosure;
Fig. 15 is a schematic structural diagram of a chip according to an embodiment of the present disclosure.

### DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The embodiments described in the following exemplary embodiments do not represent all embodiments consistent with the present disclosure. Instead, they are merely examples of devices and methods consistent with some aspects of the present disclosure as detailed in the appended claims.

Terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that, although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining" for the purpose of brevity and ease of understanding, the terms used herein when characterizing the size relationship are "greater than" or "less than", "higher than" or "lower than". However, for those skilled in the art, it can be understood that the term "greater than" also covers the meaning of "greater than or equal to", and "less than" also covers the meaning of "less than or equal to"; the term "higher than" covers the meaning of "higher than or equal to", and "lower than" also covers the meaning of "lower than or equal to".

For ease of understanding, the terms involved in the present disclosure are first introduced.

Quality of Service (QoS) refers to the probability that a network meets a given service contract, or in many cases, the term is informally used to refer to the probability that a packet passes from one point to another point in the network. QoS is a control mechanism so that different priorities are used for different users or different data flows, or to ensure that the performance of data flows reaches a certain level according to the requirements of the application.

The positioning reference signal (PRS) is used for positioning measurements. The positioning device can perform positioning based on the measurement results.

In order to better understand the method for retransmitting an SL PRS disclosed in an embodiment of the present disclosure, the communication system to which the embodiment of the present disclosure is applicable is first described below.

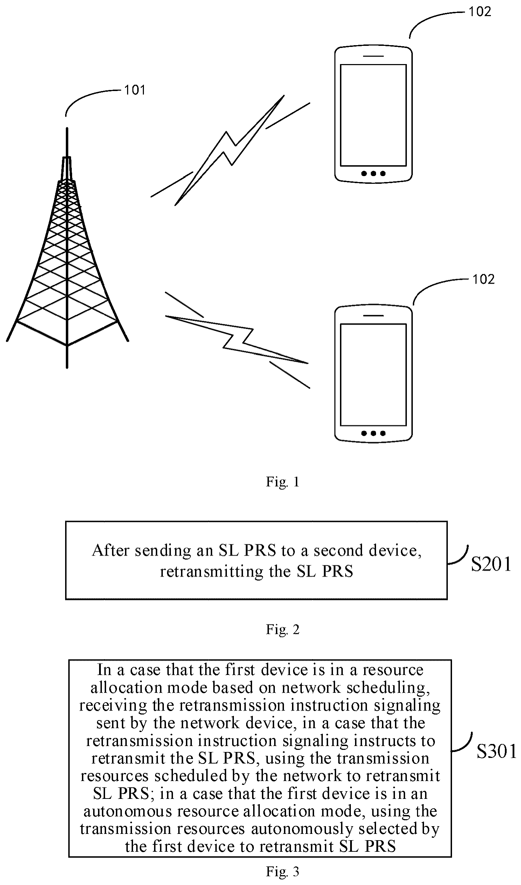

Please refer to Fig. 1, which is a schematic diagram of the architecture of a communication system according to an embodiment of the present disclosure. The communication system may include, but is not limited to, one network device and one terminal device. The quantity and form of devices shown in Fig. 1 are only used as examples and do not constitute a limitation on the embodiments of the present disclosure. In actual applications, two or more network devices and two or more terminal devices may be included. The communication system shown in Fig. 1 includes, for example, a network device 101 and a terminal device 102.

It should be noted that the technical solution of the embodiment of the present disclosure can be applied to various communication systems. For example: long term evolution (LTE) system, fifth generation (5G) mobile communication system, 5G new radio (NR) system, or other future new mobile communication systems. It should also be noted that the sidelink in the embodiment of the present disclosure can also be called SL.

The network device 101 in the embodiment of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiment of the present disclosure does not limit the specific technology and specific device form adopted by the network device. The network device provided in the embodiment of the present disclosure may be composed of a central unit (CU) and a distributed unit (DU), the CU may also be referred to as a control unit. The CU-DU structure may be used to split the protocol layer of the network device, such as a base station, and the functions of some protocol layers are placed in the CU for centralized control, and the functions of a part or all of remaining protocol layers are distributed in the DU, and the DU is centrally controlled by the CU.

The terminal device 102 in the embodiment of the present disclosure is an entity on the user side for receiving or transmitting signals, such as a mobile phone. The terminal device may also be referred to as a terminal device (terminal), user equipment (UE), mobile station (MS), mobile terminal (MT), etc. The terminal device may be a car with communication function, a smart car, a mobile phone, a wearable device, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The embodiment of the present disclosure does not limit the specific technology and specific device form adopted by the terminal device.

In sidelink communication, there are four sidelink transmission modes, among which sidelink transmission mode 1 and sidelink transmission mode 2 are used for device-to-device (D2D) communication. Sidelink transmission mode 3 and sidelink transmission mode 4 are used for V2X communication. When sidelink transmission mode 3 is adopted, resource allocation is scheduled by the network device 101. Specifically, the network device 101 can send resource allocation information to the terminal device 102, and then the terminal device 102 allocates resources to another terminal device so that the other terminal device can send information to the network device 101 through the allocated resources. In V2X communication, a terminal device with better signal or higher reliability can be used as the terminal device 102. The first terminal device mentioned in the embodiment of the present disclosure may refer to the terminal device 102, and the second terminal device may refer to the other terminal device.

It can be understood that the communication system described in the embodiment of the present disclosure is for the purpose of more clearly illustrating the technical solution of the embodiment of the present disclosure, and does not constitute a limitation on the technical solution provided by the embodiment of the present disclosure. A person skilled in the art can know that with the evolution of the system architecture and the emergence of new business scenarios, the technical solution provided by the embodiment of the present disclosure is also applicable to similar technical problems.

The method provided by the present disclosure can be applied to SL positioning services or other services. SL positioning services include SL absolute positioning, SL relative positioning and ranging. Absolute positioning is to determine the absolute coordinates of the UE, relative positioning is to determine the coordinates of the UE relative to a reference point, and ranging is to determine the distance and/or angle of the UE relative to a reference point. Positioning methods include but are not limited to SL round trip time (RTT), SL time difference of arrival (TDOA), SL angle of arrival (AOA), SL carrier phase, etc., or a combination of the foregoing method with UU positioning (positioning based on the radio interface between UE and base station).

It should be noted that the sidelink (SL) positioning reference signal (PRS) retransmission method provided in any embodiment of the present disclosure can be executed alone, or in combination with possible implementation methods in other embodiments, or in combination with any technical solution in the related technology.

The following is a detailed introduction to the sidelink (SL) positioning reference signal (PRS) retransmission method and apparatus provided by the present disclosure in conjunction with the accompanying drawings.

Please refer to Fig. 2, which is a flow chart of a method for retransmitting a sidelink (SL) positioning reference signal (PRS) according to an embodiment of the present disclosure. The method is executed by a first device, as shown in Fig. 2, and includes but is not limited to the following step:
S201: after sending an SL PRS to a second device, retransmitting the SL PRS.

Optionally, the first device may be one of a main positioning assistance UE, a positioning assistance UE and a to-be-positioned UE. Optionally, the positioning assistance UE may be of different types; for example, the positioning assistance UE may be a RSU type positioning assistance UE, which may provide positioning services by collaborating with other RSUs; for another example, the positioning assistance UE may be a normal UE. In some implementations, some positioning assistance UEs have location information such as GPS, which can assist other UEs in performing absolute positioning; other positioning assistance UEs may not have location information such as GPS.

Optionally, the second device may be a peer device directly connected to the first device via an SL, and the peer device may be a terminal device or a road side unit (RSU).

In some optional embodiments of the present disclosure, retransmitting the SL PRS may include any one of: blindly retransmitting the SL PRS to the second device for a preset number of times; retransmitting the SL PRS according to SL PRS feedback information of the second device.

In some optional embodiments of the present disclosure, the first device may determine whether to retransmit the SL PRS based on the SL PRS feedback information of the second device. If the first device receives the SL PRS feedback information of the second device and determines through the feedback information that the second device has received the previously sent SL PRS, the SL PRS will not be retransmitted; if the first device determines through the feedback information of the second device that the second device has not received the previously sent SL PRS, the SL PRS will be retransmitted. This will be described in detail in subsequent embodiments.

In some optional implementations, the first device may retransmit the SL PRS based on the SL PRS feedback information of the second device. The SL PRS feedback information of the second device may be ACK feedback information for the SL PRS sent by the first device. In a positive-negative feedback mode (positive-negative ACK feedback mode), the feedback information may include positive feedback information or negative feedback information; in a negative-only feedback mode (negative-only ACK feedback mode), the feedback information may include negative feedback information.

For example, the first device may receive positive feedback information or negative feedback information sent by the second device, and retransmit the SL PRS based on the feedback information.

In some optional implementations, the first device may not retransmit the SL PRS based on the SL PRS feedback information of the second device, that is, directly blindly retransmit the SL PRS to the second device a preset number of times.

In the embodiments of the present disclosure, for the sake of distinction, the SL PRS sent by the first device to the second device is referred to as the "sent SL PRS", and the SL PRS retransmitted by the first device to the second device is referred to as the "retransmitted SL PRS", which will not be described in detail below. In the embodiments of the present disclosure, after sending the SL PRS to the second device, the SL PRS is retransmitted based on or not based on the SL PRS feedback information of the second device, which is beneficial to improving the reliability of the SL PRS transmission, and the retransmission mechanism can reduce the risk of error in SL PRS transmission.

Please refer to Fig. 3, which is a flow chart of a method for retransmitting a sidelink (SL) positioning reference signal (PRS) according to an embodiment of the present disclosure. The SL PRS retransmission method is executed by a first device, and the embodiment shown in Fig. 3 is a further explanation of step S201 in the embodiment described in Fig. 2, and the method includes but is not limited to the following steps:
S301, in a case that the first device is in a resource allocation mode based on network scheduling, receiving the retransmission instruction signaling sent by the network device, in a case that the retransmission instruction signaling instructs to retransmit the SL PRS, using the transmission resources scheduled by the network to retransmit SL PRS; in a case that the first device is in an autonomous resource allocation mode, using the transmission resources autonomously selected by the first device to retransmit SL PRS.

In the embodiment, the manner in which the first device performs SL PRS retransmission is further explained according to two different resource allocation modes (resource allocation mode based on network scheduling and UE autonomous resource allocation mode).

In some embodiments, the first device may determine its own resource allocation mode, that is, determine whether the first device is in a resource allocation mode based on network scheduling or an autonomous resource allocation mode.

In some implementations, when the first device is in the resource allocation mode based on network scheduling, the first device may use the network scheduled resources to perform SL PRS retransmission, and the first device may receive SL PRS feedback information sent by the second device, and use the SL PRS feedback information to perform SL PRS retransmission.

In some optional embodiments, the first device retransmitting SL PRS according to SL PRS feedback information may include: in a case that the first device is in a resource allocation mode based on network scheduling, receiving the SL PRS feedback information sent by the second device; and sending the SL PRS feedback information to the network device.

In other words, in the resource allocation mode based on network scheduling, the first device decides to retransmit the SL PRS according to the SL PRS feedback information, and the first device may also send the SL PRS feedback information to the network device.

Optionally, the first device may send the SL PRS feedback information to the network device via a physical uplink control channel (PUCCH).

Optionally, the first device sending the SL PRS feedback information to the network device may include: determining configuration information of a physical uplink control channel (PUCCH) by the first device for an SL grant of the SL PRS; and sending the SL PRS feedback information to the network device through the PUCCH.

In other words, the first device can determine the PUCCH configuration information for the SL grant of the sent SL PRS, and send the SL PRS feedback information to the network device through the PUCCH. That is, if the first device is configured with the SL PUCCH configuration information for the SL grant of the sent SL-PRS, the first device can send ACK feedback to the base station through the PUCCH.

In some embodiments, in a resource allocation mode based on network scheduling, when the first device needs to perform SL data or signal transmission, the first device can send a D-SR scheduling request to the network, and the network sends DCI5/5A control information on the PDCCH/EDPCCH channel to allocate resources. The first device performs SL communication according to the resources allocated by the network.

In some implementations, in a case that the first device is in an autonomous resource allocation mode, the first device may randomly select time-frequency resources for one SL PRS transmission occasion, use the autonomously selected time-frequency resources to retransmit the SL PRS, and decide whether to retransmit the SL PRS based on the SL PRS feedback information sent by the second device.

For example, the first device may determine whether to retransmit the SL PRS according to the feedback information, e.g., the content of the feedback information sent by the second device. Specifically, the specific content of the feedback information sent by the second device will be described in detail in the following embodiments.

Optionally, the first device may select a number of times for retransmission from a maximum number of times for retransmission list indicated in the SL PRS resource pool configuration information, and based on the number of times for retransmission, select one or more time-frequency resources for SL PRS retransmission.

Of course, the first device may not perform retransmission according to the feedback information of the second device. For example, the first device may perform blind retransmission after sending the SL PRS.

In the embodiment of the present disclosure, the first device may retransmit the SL PRS according to the SL PRS feedback information in different resource allocation modes, so that the SL PRS retransmission function is more reasonable, which is beneficial to improving the reliability of the SL PRS transmission.

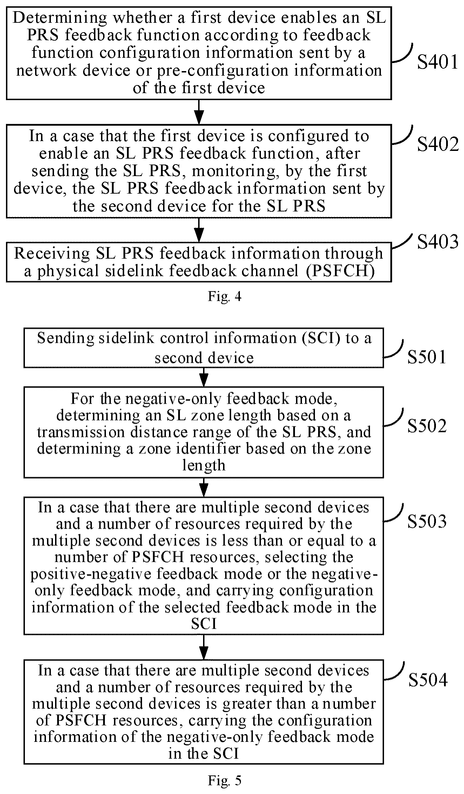

Please refer to Fig. 4, which is a flow chart of a method for retransmitting a sidelink (SL) positioning reference signal (PRS) according to an embodiment of the present disclosure. The method is performed by a first device, and the embodiment shown in Fig. 4 further describes a scheme in which the first device uses the SL PRS feedback information of the second device to retransmit the SL PRS. The method may include but is not limited to the following steps S401 to S403.

S401: determining whether a first device enables an SL PRS feedback function according to feedback function configuration information sent by a network device or pre-configuration information of the first device.

In an embodiment of the present disclosure, the first device may determine whether to enable the SL PRS feedback function (i.e., the ACK feedback function for the SL PRS, or in other words, the function of the first device to receive feedback information sent by the second device for the SL PRS) in a variety of ways. In an optional method, the first device may determine whether to enable the SL PRS feedback function according to the network configuration, for example, the first device receives feedback function configuration information sent by the network device, and determines whether to enable the SL PRS feedback function according to the feedback function configuration information. In another optional method, the first device may determine whether to enable the SL PRS feedback function according to pre-configuration information, for example, determine whether to enable the SL PRS feedback function according to the pre-configuration information of the first device itself.

Optionally, the SL-PRS ACK feedback function configuration can be configured for each UE, or configured for each SL PRS transmission, or configured for each logical channel, which is not limited in the present disclosure.

S402: in a case that the first device is configured to enable an SL PRS feedback function, after sending the SL PRS, monitoring, by the first device, the SL PRS feedback information sent by the second device for the SL PRS.

In an embodiment of the present disclosure, when the first device enables the SL PRS feedback function, after sending the SL PRS, the first device can monitor the ACK feedback information of the second device for the SL PRS. The first device can monitor the feedback information of one or more second devices, which is not limited by the present disclosure.

S403: receiving SL PRS feedback information through a physical sidelink feedback channel (PSFCH).

In some embodiments of the present disclosure, the first device may receive SL PRS feedback information sent by the second device through the PSFCH between the first device and the second device. The present disclosure does not limit the method of configuring the PSFCH, which is exemplarily described below.
1) The PSFCH can be configured based on the SL PRS dedicated sending resource pool. For example, the method includes: based on the configuration information of the SL PRS dedicated sending resource pool, determining configuration information of the PSFCH for receiving the SL PRS feedback information.
   In some implementations, the configuration information of the SL PRS dedicated sending resource pool includes configuration information about the PSFCH. The first device can determine the configuration information of the PSFCH for receiving SL PRS feedback information based on the SL PRS dedicated sending resource pool.
2) The PSFCH can be configured based on a shared resource pool, where the shared resource pool refers to a resource pool shared by SL PRS transmission resources and SL data transmission resources, that is, SL PRS is transmitted using resources in the SL data sending resource pool.

For example, the first device may determine the configuration information of the PSFCH for receiving the SL PRS feedback information based on the configuration information of the SL data sending resource pool of the first device, where the configuration information of the SL data sending resource pool includes the PSFCH configuration information of SL PRS and PSFCH configuration information of SL data.

In other words, the configuration information of the SL data sending resource pool of the first device includes both the configuration information of the PSFCH for transmitting SL data and the configuration information of the PSFCH dedicated to transmitting SL PRS.

For another example, the first device may determine that the configuration information of the PSFCH for receiving SL PRS feedback information is the configuration information of the PSFCH for receiving SL data, based on configuration information of an SL data sending resource pool of the first device.

In other words, the configuration information of the SL data sending resource pool of the first device includes the configuration information of the PSFCH for transmitting SL data, and the PSFCH may not be configured specifically for the SL PRS. The first device may use the PSFCH for transmitting SL data to transmit the SL PRS.

In some optional implementations, in a case that the first device is in an autonomous resource allocation mode, and the first device is configured to enable the SL PRS feedback function, a sending resource pool configured with PSFCH can be selected to perform the SL PRS retransmission.

It should be understood that the above step S401 may be an optional step.

Of course, if the first terminal device is not configured to enable the SL PRS feedback function, it cannot receive the feedback information sent by the second device. Regardless of whether the second device successfully receives the PRS or what kind of feedback information the second device sends, the first device would not be aware. In this case, the first device can adopt a blind retransmission method, e.g., retransmitting the PRS in a preset time period after sending the PRS.

In the embodiment of the present disclosure, the first device may receive SL PRS feedback information via PSFCH to retransmit SL PRS based on the feedback information, which is beneficial to improving the reliability of SL PRS transmission, and the retransmission mechanism can reduce the risk of error in SL PRS transmission.

Please refer to Fig. 5, which is a flow chart of a method for retransmitting a sidelink (SL) positioning reference signal (PRS) according to an embodiment of the present disclosure. The method is performed by a first device, and the embodiment shown in Fig. 5 further describes a scheme in which the first device uses the SL PRS feedback information of the second device to retransmit the SL PRS. The method may include but is not limited to the following step:
S501, sending sidelink control information (SCI) to a second device.

Optionally, in a case that the first device is configured to enable the SL PRS feedback function, the SCI carries an indication instructing the second device to feed back feedback information. That is, when the first device has the SL PRS feedback function, the sidelink control information (SCI) may include but is not limited to an indication instructing the second device to feed back feedback information.

In other words, in a case that the first device is configured to enable the SL PRS feedback function, the first device may instruct the second device to send feedback information by carrying the indication in the SCI. Upon receiving the SCI and in response to the indication, the second device sends ACK feedback for the SL PRS sent by the first device.

In an optional implementation, when sending the SL PRS to the second device in a group cast mode, the SCI carries feedback mode indication information, and the feedback mode indication information includes positive-negative feedback mode or negative-only feedback mode. In other words, the first device can indicate the feedback mode to the second device through the SCI, that is, instruct the second device to send ACK feedback in a positive -negative feedback mode or in the negative-only feedback mode. In a case of the positive-negative feedback mode, the first device can receive positive feedback information or negative feedback information sent by the second device, and in a case of the negative-only feedback mode, the first device can receive negative feedback information sent by the second device.

Optionally, the method further includes:
S502, for the negative-only feedback mode, determining an SL zone length based on a transmission distance range of the SL PRS, and determining a zone identifier based on the zone length.

In the embodiment of the present disclosure, the transmission distance range of the SL-PRS is configured by the network or by the pre-configuration information of the UE, and the unit is meter, such as 20 meters, 50 meters, 100 meters, 500 meters, and 2000 meters. The transmission distance range of the SL-PRS can be configured for each SL PRS configuration, or configured for each SL PRS set, or configured for each UE, which is not limited in the present disclosure.

The first device determines the SL zone length (sl-ZoneLength) based on the transmission distance range of the SL PRS, and determines the zone identifier (Zone_id) based on the SL zone length. For the manner in which the first device determines the zone identifier based on the SL zone length, reference may be made to TS38.331 and will not be repeated here.

In some optional implementations, the first device may carry the transmission distance range requirement, i.e., the above-mentioned zone identifier, in the SCI.

It should be understood that step S502 is an optional step, and the timing of the above steps S501 and S502 is not limited in this disclosure. S502 may be performed first, to carry the determined zone identifier in the SCI, and the zone identifier is sent to the second device by performing step S501.

Optionally, in the case where there are multiple second devices and a number of resources required by the second devices is different, the method further includes the following optional steps S503 and S504.

S503: in a case that there are multiple second devices and a number of resources required by the multiple second devices is less than or equal to a number of PSFCH resources, selecting the positive-negative feedback mode or the negative-only feedback mode, and carrying configuration information of the selected feedback mode in the SCI.

In an embodiment of the present disclosure, if a number of resources required by the second devices is less than or equal to a number of PSFCH resources, that is, the number of configurable resources can meet the group size requirement of the second device, then the first device can arbitrarily select the positive-negative feedback mode or the negative-only feedback mode, and carry configuration information of the selected feedback mode in the SCI.

S504: in a case that there are multiple second devices and a number of resources required by the multiple second devices is greater than a number of PSFCH resources, carrying the configuration information of the negative-only feedback mode in the SCI.

In the embodiment of the present disclosure, if a number of resources required by the second devices is greater than a number of PSFCH resources, that is, the number of configurable resources cannot meet the requirement, the first device selects the negative-only feedback mode and carries configuration information of the negative-only feedback mode in the SCI.

In the embodiment of the present disclosure, when the SL PRS feedback function is enabled, the first device may carry, in the SCI, an indication instructing the second device to feed back feedback information according to different feedback modes, so as to utilize the feedback message to retransmit the SL PRS, which is beneficial to improving the reliability of SL PRS transmission, and the retransmission mechanism can reduce the risk of error in SL PRS transmission.

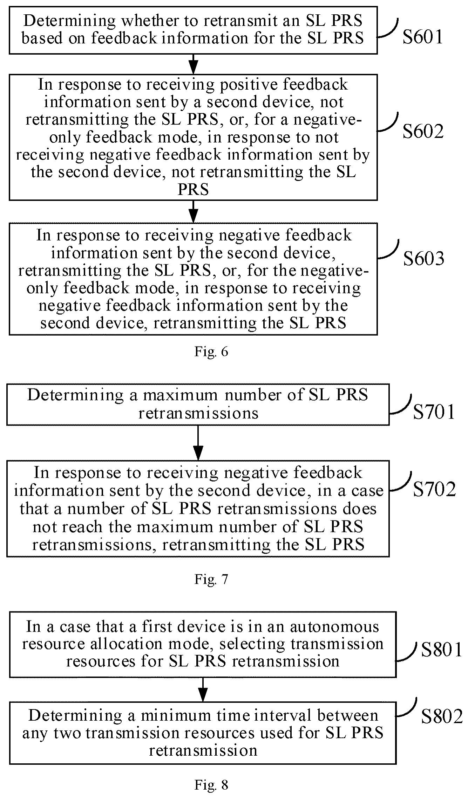

Please refer to Fig. 6, which is a flow chart of a method for retransmitting a sidelink (SL) positioning reference signal (PRS) according to an embodiment of the present disclosure. The method is performed by a first device, and the embodiment shown in Fig. 6 further describes a scheme for the first device to determine whether to perform SL retransmission based on feedback information, and the method includes but is not limited to the following steps S601 to S603.

S601: determining whether to retransmit an SL PRS based on feedback information for the SL PRS.

S602: in response to receiving positive feedback information sent by a second device, not retransmitting the SL PRS, or, for a negative-only feedback mode, in response to not receiving negative feedback information sent by the second device, not retransmitting the SL PRS.

S603: in response to receiving negative feedback information sent by the second device, retransmitting the SL PRS, or, for the negative-only feedback mode, in response to receiving negative feedback information sent by the second device, retransmitting the SL PRS.

In an embodiment of the present disclosure, the first device may use the SL PRS feedback information of the second device to perform SL PRS retransmission. For example, if the first device receives positive feedback information sent by the second device, that is, the second device has successfully received the SL PRS, there is no need to retransmit the SL PRS. In order to save resources, the first device may give up retransmitting the SL PRS.

For example, the first device instructs the second device to provide feedback in a positive-negative feedback mode, that is, the feedback mode indicated in the SCI is a positive-negative feedback mode. If the second device successfully receives the SL PRS sent by the first device, that is, the second device successfully detects the SL PRS signal on the time-frequency resources specified by the SCI, or the sequence ID of the sent SL PRS signal is the same as the sequence ID expected to be received, then it means that the second device has successfully received the SL PRS. At this time, the second device can send positive feedback information to the first device. In response to receiving positive feedback information sent by the second device, the first device determines that the second device has successfully received the SL PRS, and there is no need to retransmit the SL PRS. The first device gives up retransmitting the SL PRS.

For another example, when the first device sends the SL PRS in unicast mode, if the second device successfully receives the SL PRS, the second device may send positive feedback information to the first device. In response to receiving positive feedback information sent by the second device, the first device determines that the second device has successfully received the SL PRS, and there is no need to retransmit the SL PRS. The first device gives up retransmitting the SL PRS.

In other words, in the positive-negative feedback mode, if the first device has received negative feedback information sent by the second device, the first device can determine that the second device has not successfully received the SL PRS, and the first device can retransmit the SL PRS; when the first device sends the SL PRS in a unicast mode, if the first device receives negative feedback information sent by the second device, the first device can determine that the second device has not successfully received the SL PRS, and the first device can retransmit the SL PRS.

Optionally, the method further includes:
in an embodiment of the present disclosure, the first device may retransmit the SL PRS based on the SL PRS feedback information of the second device. For example, if the feedback mode indicated by the first device is the negative-only feedback mode, and the first device does not receive the negative feedback information sent by the second device, that is, the second device has successfully received the SL PRS, then there is no need to retransmit the SL PRS. In order to save resources, the first device may give up retransmitting the SL PRS.

For example, the first device instructs the second device to provide feedback in a negative-only feedback mode, that is, the feedback mode indicated in the SCI is a negative-only feedback mode. If the second device fails to successfully receive the SL-PRS and one of the following situations occurs, the second device may send negative feedback information to the first device:
a distance between the second device and a center of a zone closest to the second device is less than a transmission distance range indicated in the SCI;
there is no indication of the transmission distance range of the zone identifier in the SCI of SL-PRS;
location information of the second device is not available.

In other words, for the negative-only feedback mode, the second device sends negative feedback information to the first device only when the SL PRS is not successfully received, and does not send feedback information if the SL PRS is successfully received. That is, in response to the failure to receive negative feedback information, the first device can determine that the second device successfully receives the SL PRS, and in this case, for the sake of saving resources, the first device can give up retransmitting the SL PRS. That is to say, in the negative-only feedback mode, in response to having received negative feedback information, the first device can determine that the second device has not successfully received the SL PRS, and in this case, the first device can retransmit the SL PRS.

In an optional embodiment, for the above steps S601 to S603, the second device successfully receiving the SL PRS may refer to that the second device has successfully detected the SL PRS signal on the time-frequency resources specified by SCI, or that the second device has determined that the sequence identifier of the SL PRS is the same as the sequence identifier expected to be received. The sequence identifier expected to be received may be indicated in the SCI, or indicated through an RRC/SLPP/LPP message, which is not limited in the present disclosure.

In the embodiments of the present disclosure, "not received" or "received" may mean not received or received within a preset time period, where the preset time period may be agreed upon by the protocol, configured in the pre-configuration information of the first device, or indicated by other devices (including but not limited to network devices or other UE devices), which is not limited in the present disclosure.

In the embodiment of the present disclosure, the first device can respond to different feedback messages of the second device according to different feedback modes to utilize the feedback information to retransmit the SL PRS, which is beneficial to improving the reliability of the SL PRS transmission, and the retransmission mechanism can reduce the risk of error in SL PRS transmission.

Please refer to Fig. 7, which is a flow chart of a method for retransmitting a sidelink (SL) positioning reference signal (PRS) according to an embodiment of the present disclosure. The method is performed by a first device, and the embodiment shown in Fig. 7 further describes a scheme for the first device to retransmit the SL PRS using SL PRS feedback information, and the method includes but is not limited to the following steps S701 and S702.

S701: determining a maximum number of times for SL PRS retransmissions.

In an optional embodiment of the present disclosure, in a case that the first device is in an autonomous resource allocation mode, the first device may determine the maximum number of times for SL PRS retransmissions based on configuration information of the SL data sending resource pool of the first device.

For example, for SL PRS autonomous resource allocation mode, the maximum number of times for SL PRS retransmissions is indicated in the SL sending resource pool configuration information. The maximum number of times for retransmissions may be configured SL PRS separately, or SL PRS and SL data share the configuration of the maximum number of times for retransmissions.

In another optional embodiment of the present disclosure, the first device may determine the maximum number of times for SL PRS retransmissions based on configuration information of the SL PRS configured grant.

For example, for SL PRS configured grant, the maximum number of times for SL PRS retransmissions is indicated in the configuration information of the SL PRS configured grant.

S702: in response to receiving negative feedback information sent by the second device, in a case that a number of times for SL PRS retransmissions does not reach the maximum number of times for SL PRS retransmissions, retransmitting the SL PRS.

In some implementations, for example, when the feedback mode is a positive-negative feedback mode, the first device may determine that the second device has not successfully received the SL PRS in response to receiving negative feedback information sent by the second device. The first device may retransmit the SL PRS based on or not based on the SL PRS feedback information. If the maximum number of times for retransmissions has been reached, the retransmission may be given up. If the maximum number of times for retransmissions has not been reached, the retransmission may be performed.

It should be understood that the above step S701 may be an optional step.

In the embodiment of the present disclosure, the first device may utilize the feedback message to retransmit the SL PRS based on whether the maximum number of times for retransmissions in response to the negative feedback message sent by the second device has been reached, which is beneficial to improving the reliability of SL PRS transmission, and the retransmission mechanism can reduce the risk of error in SL PRS transmission.

Please refer to Fig. 8, which is a flow chart of a method for retransmitting a sidelink (SL) positioning reference signal (PRS) according to an embodiment of the present disclosure. The method is executed by a first device, and the embodiment shown in Fig. 8 further describes a scheme for retransmitting SL PRS using SL PRS feedback information, and the method includes but is not limited to the following steps S801 and S802.

S801: in a case that a first device is in an autonomous resource allocation mode, selecting transmission resources for SL PRS retransmission.

S802: determining a minimum time interval between any two transmission resources used for SL PRS retransmission.

In an optional embodiment, the first device may determine the minimum time interval in the following manner.
1) Determining that the minimum time interval between any two transmission resources used for SL PRS retransmission is a time interval between an end position of a last symbol of transmission of the SL PRS and a start position of a first symbol of reception of a PSFCH.
   For example, the minimum time interval is a time interval between the end position of the last symbol of SL PRS transmission and the start position of the first symbol of PSFCH reception.
2) Determining that the minimum time interval between any two transmission resources used for SL PRS retransmission is a time required for PSFCH reception and processing plus an SL PRS retransmission preparation time and a switching time for switching from sending to receiving or for switching from receiving to sending.

For example, the minimum time interval is a sum of the time required for PSFCH reception and processing, the SL PRS retransmission preparation time, and a switching time for switching from sending to receiving (TX-RX) or from receiving to sending (RX-TX).

In the embodiment of the present disclosure, the first device in the autonomous resource allocation mode selects the transmission resources for retransmission so as to utilize SL PRS feedback information to perform SL PRS retransmission, which is beneficial to improving the reliability of SL PRS transmission, and the retransmission mechanism can reduce the risk of error in SL PRS transmission.

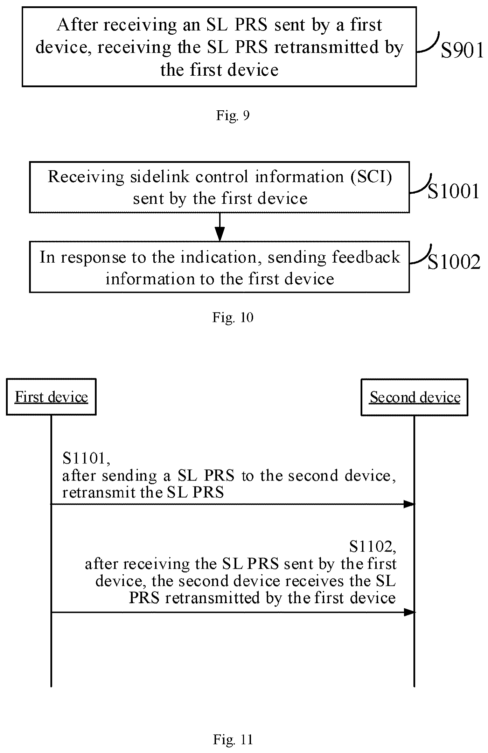

Please refer to Fig. 9, which is a flow chart of a method for retransmitting a sidelink (SL) positioning reference signal (PRS) according to an embodiment of the present disclosure. The method is executed by a second device. As shown in Fig. 9, the method includes but is not limited to the following step:
S901: after receiving an SL PRS sent by a first device, receiving the SL PRS retransmitted by the first device.

Corresponding to the embodiment shown in Fig. 2 above, after receiving the SL PRS sent by the first device, the first device can retransmit the SL PRS, and accordingly, the second device can receive the retransmitted SL PRS. If the first device retransmits the SL PRS based on the SL PRS feedback information of the second device, the second device can also send SL PRS feedback information to the first device.

For other similar descriptions, reference may be made to the embodiment shown in Fig. 2, which will not be repeated here.

In the embodiment of the present disclosure, after receiving the SL PRS sent by the first device, the second device receives the SL PRS retransmitted by the first device, which is conducive to improving the reliability of SL PRS transmission, and the retransmission mechanism can reduce the risk of error in SL PRS transmission.

Fig. 10 is a flow chart of a method for retransmitting a sidelink (SL) positioning reference signal (PRS) according to an embodiment of the present disclosure. The method is executed by a second device. Based on the embodiment shown in Fig. 9, the method includes but is not limited to the following steps S1001 and S1002.

S1001: receiving sidelink control information (SCI) sent by the first device.

In a case that the first device is configured to enable the SL PRS feedback function, the SCI carries an indication instructing the second device to feed back the feedback information.

Optionally, in a case that the first device is configured to enable the SL PRS feedback function, the SCI carries an indication instructing the second device to feed back feedback information. That is, when the first device has the SL PRS feedback function, the SCI may include but is not limited to an indication instructing the second device to feed back feedback information.

S1002: in response to the indication, sending feedback information to the first device.

In an embodiment of the present disclosure, upon receiving the SCI and in response to the indication, the second device sends an ACK feedback to the SL PRS sent by the first device.

In an optional implementation, when sending the SL PRS to the second device in a group cast mode, the SCI may also carry feedback mode indication information. The feedback mode indication information includes a positive-negative feedback mode and a negative-only feedback mode. In other words, for the positive-negative feedback mode, the second device may send positive feedback information or negative feedback information to the first device, and for the negative-only feedback mode, the second device may send negative feedback information to the first device.

In some optional embodiments, the method further includes: in a case that the SL PRS is sent in a group cast mode, determining the feedback mode indication information carried by the SCI; in response to the feedback mode indication information indicating a positive-negative feedback mode, if the SL PRS is successfully received, sending positive feedback information to the first device; if the SL PRS is not successfully received, sending negative feedback information to the first device.

In some optional embodiments, the method further includes: in a case that the SL PRS is sent in a unicast mode, if the SL PRS is successfully received, sending positive feedback information to the first device; if the SL PRS is not successfully received, sending negative feedback information to the first device.

In some optional embodiments, the method further includes: determining feedback mode indication information carried by the SCI; in response to the feedback mode indication information indicating the negative-only feedback mode, if the SL PRS is not successfully received and one of the following conditions is met, sending negative feedback information to the first device:
a distance between the second device and a center position of a nearest zone is less than a transmis sion distance range indicated in the SCI;
the SCI does not indicate a zone identifier and/or the transmission distance range;
location information of the second device is not available.

In an embodiment of the present disclosure, the second device can determine the feedback mode configuration information in the SCI. In the positive-negative feedback mode, that is, the feedback mode indicated in the SCI is the positive-negative feedback mode, if the second device successfully receives the SL PRS sent by the first device, that is, the second device successfully detects the SL PRS signal on the time-frequency resources specified by the SCI, or the sequence ID of the sent SL PRS signal is the same as the sequence ID expected to be received, it means that the second device has successfully received the SL PRS, at this time, the second device can send positive feedback information to the first device; otherwise, the second device sends negative feedback information.

For another example, when the first device sends the SL PRS in a unicast mode, if the second device successfully receives the SL PRS, the second device may send positive feedback information to the first device, otherwise, the second device may send negative feedback information.

In other words, in the positive-negative feedback mode, if the second device fails to successfully receive the SL PRS, the second device can send negative feedback information to the first device, the first device can determine that the second device fails to successfully receive the SL PRS, the first device can retransmit the SL PRS based on the negative feedback information, and the second device can receive the SL PRS retransmitted by the first device. In a case that the first device sends the SL PRS in a unicast mode, if the second device fails to successfully receive the SL PRS, the second device can send negative feedback information to the first device, the first device can retransmit the SL PRS based on the negative feedback information, and the second device can receive the SL PRS retransmitted by the first device.

In addition, in the negative-only feedback mode, the second device sends negative feedback information to the first device only when the SL PRS is not successfully received, and does not send feedback information if the SL PRS is successfully received. That is, if the second device fails to receive the SL PRS, the second device can send negative feedback information to the first device, and the first device can retransmit the SL PRS based on the negative feedback information, and the second device can receive the SL PRS retransmitted by the first device.

The second device successfully receiving the SL PRS may refer to that the second device successfully detects the SL PRS signal on the time-frequency resources specified by the SCI, or that the second device determines that the sequence identifier of the SL PRS is the same as the sequence identifier expected to be received. The sequence identifier expected to be received may be indicated in the SCI or indicated by an RRC/SLPP/LPP message, which is not limited by the present disclosure.

In the above embodiments provided by the present disclosure, the method performed by the first device according to the embodiments of the present disclosure is introduced. In order to implement the functions in the methods provided by the above embodiments of the present disclosure, the first device may include a hardware structure and a software module, and implement the above functions in the form of a hardware structure, a software module, or a hardware structure plus a software module. One of the above functions may be executed in the form of a hardware structure, a software module, or a hardware structure plus a software module.

Fig. 11 is a schematic diagram of interactions of a method for retransmitting a sidelink (SL) positioning reference signal (PRS) according to an embodiment of the present disclosure. The method is executed by a communication system, and the communication system includes a first device and a second device. The method includes:
S1101: after sending a SL PRS to the second device, retransmit the SL PRS;
S1102: after receiving the SL PRS sent by the first device, the second device receives the SL PRS retransmitted by the first device.

For the specific explanation of the above steps S1101 and S1102, reference can be made to the embodiments described in Figs. 2 to 10, and will not be repeated here.

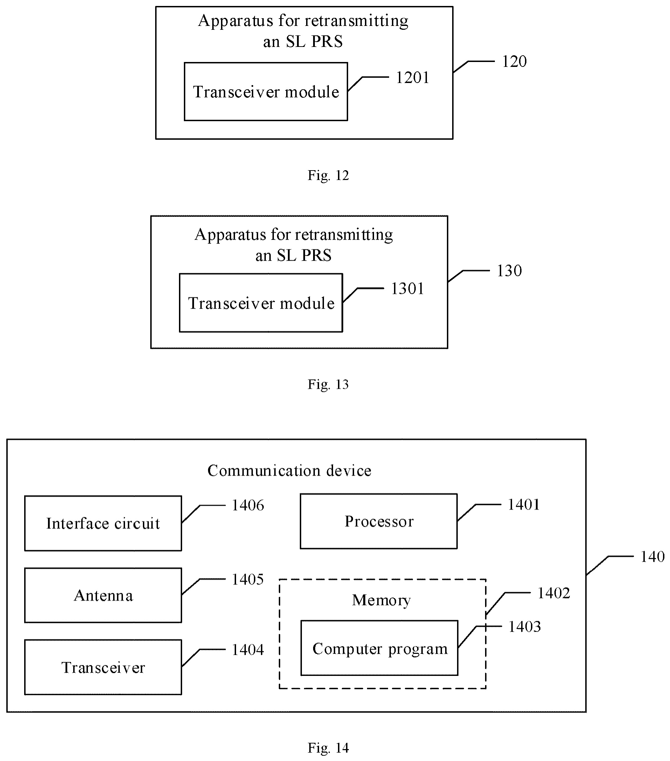

Please refer to Fig. 12, which is a schematic structural diagram of an apparatus for retransmitting a sidelink (SL) positioning reference signal (PRS) 120 according to an embodiment of the present disclosure. The apparatus 120 for retransmitting a sidelink (SL) positioning reference signal (PRS) shown in Fig. 12 may include a transceiver module 1201. The transceiver module 1201 may include a sending module and/or a receiving module, the sending module is configured to implement a sending function, the receiving module is configured to implement a receiving function, and the transceiver module 1201 may implement a sending function and/or a receiving function.

The communication device 120 may be the first device, or a device in the first device, or a device that can be used in conjunction with the first device.

The communication device 120 is the first device.

The transceiver module 1201 is configured to retransmit the SL PRS after sending the SL PRS to the second device.

Optionally, the transceiver module 1201 is further configured to retransmit the SL PRS according to the SL PRS feedback information of the second device; and blindly retransmit the SL PRS to the second device a preset number of times.

Optionally, the transceiver module 1201 is also configured to determine the resource allocation mode of the first device; in a case that the first device is in a resource allocation mode based on network scheduling, receive the retransmission instruction signaling sent by the network device, and in a case that the retransmission instruction signaling instructs to retransmit the SL PRS, retransmit the SL PRS by using transmission resources scheduled by a network; in a case that the first device is in an autonomous resource allocation mode, retransmit the SL PRS by using transmission resources autonomously selected by the first device.

Optionally, the transceiver module 1201 is further configured to, when the first device is in a resource allocation mode based on network scheduling, receive the SL PRS feedback information sent by the second device; and send the SL PRS feedback information to the network device.

Optionally, when sending the SL PRS feedback information to the network device, the transceiver module 1201 is further configured to determine configuration information of a physical uplink control channel (PUCCH) by the first device for an SL grant of the SL PRS; and send the SL PRS feedback information to the network device through the PUCCH.

Optionally, the transceiver module 1201 is also configured to, in a case that the first device is configured to enable the SL PRS feedback function, monitor SL PRS feedback information sent by the second device for the SL PRS after sending the SL PRS; and receive the SL PRS feedback information through the physical sidelink feedback channel (PSFCH).

Optionally, the transceiver module 1201 is further configured to determine whether the first device enables the SL PRS feedback function according to feedback function configuration information sent by the network device or pre-configuration information of the first device.

Optionally, the transceiver module 1201 is also configured to determine the configuration information of the PSFCH for receiving SL PRS feedback information based on the configuration information of the SL PRS dedicated sending resource pool; determine the configuration information of the PSFCH for receiving SL PRS feedback information based on configuration information of an SL data sending resource pool of the first device, where the configuration information of the SL data sending resource pool includes configuration information of a PSFCH for the SL PRS and configuration information of a PSFCH for SL data; determine that the configuration information of the PSFCH for receiving the SL PRS feedback information is configuration information of a PSFCH for receiving the SL data based on configuration information of an SL data sending resource pool of the first device.

Optionally, the transceiver module 1201 is further configured to send sidelink control information (SCI) to the second device, where in a case that the first device is configured to enable the SL PRS feedback function, the SCI carries an indication instructing the second device to feed back the feedback information.

Optionally, in a case that the SL PRS is sent to the second device in a group cast mode, the SCI carries feedback mode indication information, and the feedback mode indication information includes a positive-negative feedback mode and a negative-only feedback mode.

Optionally, for the negative-only feedback mode, the SL zone length is determined based on the transmission distance range of the SL PRS; and the zone identifier is determined based on the zone length.

Optionally, in a case that there are multiple second devices and a number of resources required by the multiple second devices is less than or equal to a number of PSFCH resources, a positive-negative feedback mode or the negative-only feedback mode is selected, and the configuration information of the selected feedback mode is carried in the SCI; in a case that there are multiple second devices and a number of resources required by the multiple second devices is greater than a number of PSFCH resources, the configuration information of the negative-only feedback mode is carried in the SCI.

Optionally, the transceiver module 1201 is further configured to not retransmit the SL PRS in response to receiving positive feedback information sent by the second device; for the negative-only feedback mode, not retransmit the SL PRS retransmission in response to not receiving negative feedback information sent by the second device.

Optionally, when SL PRS retransmission is performed based on SL PRS feedback information of the second device, the transceiver module 1201 is further configured to retransmit the SL PRS in response to receiving negative feedback information sent by the second device in a case that a number of times for SL PRS retransmissions does not reach a maximum number of times for SL PRS retransmissions.

Optionally, when the first device is in autonomous resource allocation mode, the maximum number of times for SL PRS retransmissions is determined based on configuration information of the SL data sending resource pool of the first device; and the maximum number of times for SL PRS retransmissions is determined based on configuration information of the SL PRS configured grant.

Optionally, the transceiver module 1201 is further configured to select a transmission resource for SL PRS retransmission in a case that the first device is in an autonomous resource allocation mode; and determine a minimum time interval between any two transmission resources for SL PRS retransmission.

Optionally, when determining the minimum time interval between any two transmission resources for SL PRS retransmission, the time interval between an end position of a last symbol of transmission of the SL PRS and a start position of a first symbol of reception of a PSFCH can be determined as the minimum time interval between any two transmission resources for SL PRS retransmission; the time required for PSFCH reception and processing plus the SL PRS retransmission preparation time and the switching time for switching from sending to receiving or from receiving to sending can be determined as the minimum time interval between any two transmission resources for SL PRS retransmission.

Optionally, when the first device is in autonomous resource allocation mode and is configured to enable an SL PRS feedback function, a sending resource pool configured with a PSFCH is selected.

Optionally, the transceiver module 1201 is further configured to select a number of times for retransmission from a maximum number of times for retransmission list indicated in the SL PRS resource pool configuration information in a case that the first device is in the autonomous resource allocation mode; and based on the number of times for retransmission, select one or more time-frequency resources for SL PRS retransmission.

Fig. 13 is a schematic structural diagram of an apparatus for retransmitting a sidelink (SL) positioning reference signal (PRS) according to an embodiment of the present disclosure. The communication device 130 is a second device, and includes:
a transceiver module 1301, configured to receive an SL PRS retransmitted by the first device after receiving the SL PRS sent by the first device.

Optionally, the transceiver module 1301 is also configured to receive sidelink control information (SCI) sent by the first device, where in a case that the first device is configured to enable the SL PRS feedback function, the SCI carries an indication instructing the second device to feed back feedback information; and in response to the indication, send feedback information to the first device.

Optionally, the transceiver module 1301 is also configured to determine the feedback mode indication information carried by the SCI in a case that the SL PRS is sent in a group cast mode; in response to the feedback mode indication information indicating a positive-negative feedback mode, if the SL PRS is successfully received, send positive feedback information to the first device; if the SL PRS is not successfully received, send negative feedback information to the first device.

Optionally, the transceiver module 1301 is further configured to, in a case that the SL PRS is sent in a unicast mode, send positive feedback information to the first device if the SL PRS is successfully received; and send negative feedback information to the first device if the SL PRS is not successfully received.

Optionally, the transceiver module 1301 is also configured to determine the feedback mode indication information carried by the SCI; in response to the feedback mode indication information indicating the negative-only feedback mode, if the SL PRS is not successfully received and one of the following conditions is met, sending negative feedback information to the first device: a distance between the second device and a center position of the nearest zone is less than a transmission distance range indicated in the SCI; the SCI does not indicate the zone identifier and/or the transmission distance range; the location information of the second device is not available.

Please refer to Fig. 14, which is a schematic structural diagram of another communication device 140 according to an embodiment of the present disclosure. The communication device 140 can be a network device, or a terminal device, or a chip, a chip system, or a processor that supports the network device to implement the above method, or a chip, a chip system, or a processor that supports the terminal device to implement the above method. The device can be used to implement the method described in the above method embodiment, and for details of the method, reference can be made to the description of the above method embodiments.

The communication device 140 may include one or more processors 1401. The processor 1401 may be a general-purpose processor or a dedicated processor, etc. For example, it may be a baseband processor or a central processing unit. The baseband processor may be used to process the communication protocol and communication data, and the central processing unit may be used to control the communication device (such as a base station, a baseband chip, a terminal device, a terminal device chip, a DU or CU), execute a computer program, and process the data of the computer program.

Optionally, the communication device 140 may further include one or more memories 1402, on which a computer program 1403 may be stored, and the processor 1401 executes the computer program 1403 so that the communication device 140 performs the method described in the above method embodiment. Optionally, data may also be stored in the memory 1402. The communication device 140 and the memory 1402 may be provided separately or integrated together.

Optionally, the communication device 140 may further include a transceiver 1404 and an antenna 1405. The transceiver 1404 may be referred to as a transceiver unit, a transceiver, or a transceiver circuit, etc., for implementing a transceiver function. The transceiver 1404 may include a receiver and a transmitter, the receiver may be referred to as a receiving device or a receiving circuit, etc., for implementing a receiving function; the transmitter may be referred to as a transmitting device or a transmitting circuit, etc., for implementing a transmitting function.

Optionally, the communication device 140 may further include one or more interface circuits 1406. The interface circuit 1406 is used to receive code instructions and transmit them to the processor 1401. The processor 1401 runs the code instructions to enable the communication device 140 to perform the method described in the above method embodiments.

The communication device 140 is a terminal device configured to implement the functions of the terminal device in the aforementioned embodiments.

The communication device 140 is a network device configured to implement the functions of the network device in the aforementioned embodiments.

In one implementation, the processor 1401 may include a transceiver for implementing receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface, or interface circuit may be used for reading and writing code/data, or the above-mentioned transceiver circuit, interface, or interface circuit may be used for transmitting or delivering signals.

In one implementation, the processor 1401 may store a computer program 1403. The computer program 1403, when being executed by the processor 1401, enables the communication device 140 to perform the method described in the above method embodiment. The computer program 1403 may be a firmware in the processor 1401, in which case the processor 1401 may be implemented by hardware.

In an implementation, the communication device 140 may include a circuit that can implement the functions of sending or receiving or communicating in the aforementioned method embodiments. The processor and transceiver described in the present disclosure can be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver can also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs).

The communication device described in the above embodiments may be a network device or a terminal device, but the scope of the communication device described in the present disclosure is not limited thereto, and the structure of the communication device may not be limited by Fig. 14. The communication device may be an independent device or may be part of a larger device. For example, the communication device may be:
(1) An independent integrated circuit IC, or chip, or chip system or subsystem;
(2) A collection of one or more ICs, optionally including a storage component for storing data or computer programs;
(3) ASIC, such as modem;
(4) Modules that can be embedded in other devices;
(5) Receivers, terminal devices, intelligent terminal devices, cellular phones, wireless devices, handheld devices, mobile units, vehicle-mounted devices, network devices, cloud devices, artificial intelligence devices, etc.;
(6) and the like.

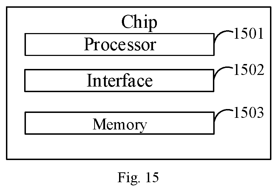

For the case where the communication device is a chip or a chip system, please refer to the schematic diagram of the chip structure shown in Fig. 15. The chip shown in Fig. 15 includes a processor 1501 and an interface 1502. There may be one or more processors 1501, and there may be multiple interfaces 1502.

For the case where the chip is used to implement the function of the first device in the embodiment of the present disclosure:
the processor 1501 is configured to determine priority information of SL PRS transmission; and

the interface 1502 is configured to perform the SL PRS transmission with the second device according to the priority information of the SL PRS transmission.

Optionally, the processor 1501 is further configured to determine the priority of the SL PRS transmission according to the priority information of the SL PRS transmission; and perform the SL PRS transmission with the second device according to the priority of the SL PRS transmission.

Optionally, the interface 1502 is further configured to determine the priority of the UL transmission when there is a transmission collision between the SL PRS transmission and the uplink UL transmission of the first device; determine a first priority relationship between the SL PRS transmission and the UL transmission according to the priority of the SL PRS transmission and the priority of the UL transmission; and perform the SL PRS transmission with the second device according to the first priority relationship.

Optionally, when the SL PRS transmission and the UL transmission cannot be performed simultaneously, the interface 1502 is also configured to perform the SL PRS transmission with the second device if the priority of the SL PRS transmission is higher than the priority of the UL transmission; or perform the UL transmission with other second device if the priority of the SL PRS transmission is lower than the priority of the UL transmission.

Optionally, when the SL PRS transmission and the UL transmission can be carried out simultaneously but there is an overlap in time, the interface 1502 is also configured to when the priority of the SL PRS transmission is higher than the priority of the UL transmission, perform the SL PRS transmission with the second device; or, when the priority of the SL PRS transmission is lower than the priority of the UL transmission, perform the UL transmission with other second device.

Optionally, when the total transmission power of the first device required during the overlapping period of the SL PRS transmission and the UL transmission is greater than a power threshold, the interface 1502 is further configured to maintain the transmission power of the SL PRS transmission and reduce the transmission power of the UL transmission when the priority of the SL PRS transmission is higher than the priority of the UL transmission, so as to limit the total transmission power to be less than or equal to the power threshold; or, when the priority of the SL PRS transmission is lower than the priority of the UL transmission, maintain the transmission power of the UL transmission and reduce the transmission power of the SL PRS transmission to limit the total transmission power to be less than or equal to the power threshold.

Optionally, the first device performs a first transmission in a first network, and/or performs a second transmission in a second network, where at least one of the first transmission and the second transmission is the SL PRS transmission, and the interface 1502 is further configured to determine a second priority relationship between the first transmission and the second transmission according to the priority of the SL PRS transmission; determine a high-priority transmission corresponding to the first transmission and the second transmission according to the second priority relationship, and perform the high-priority transmission.

Optionally, the processor 1501 is further configured to determine start times of the first transmission and the second transmission, and determine an earliest start time therefrom;

Optionally, the interface 1502 is further configured to select a higher priority transmission from the first transmission and the second transmission for transmission based on the determined priorities of the first transmission and the second transmission when the priorities of the first transmission and the second transmission are determined before the earliest start time.

Optionally, the UL transmission includes one of the following preset uplink transmissions: transmission of a physical random access channel (PRACH); transmission and retransmission of a physical uplink shared channel (PUSCH) scheduled by an uplink grant in a random access response (RAR); transmission and retransmission of a PUSCH corresponding to a type 2 random access; a physical uplink control channel (PUCCH) carrying a hybrid automatic repeat request acknowledgement (HARQ-ACK) of an RAR or SL; a PUCCH carrying downlink control information (DCI) scrambled with a temporary cell radio network temporary identifier (TC-RNTI).

Optionally, the UL transmission further includes other UL transmissions except the preset uplink transmission types, and the processor 1501 is further configured to determine, according to a priority threshold, a third priority relationship between the SL PRS transmission and the other UL transmissions.

Optionally, the processor 1501 is further configured to, when the priority value is negatively correlated with the priority level, if the transmission priority of the SL PRS is lower than the priority threshold, determine that the transmission priority of the SL PRS is higher than the other UL transmissions; or, if the transmission priority of the SL PRS is higher than the priority threshold, determine that the transmission priority of the SL PRS is lower than the other UL transmissions;

In the case where the priority value is positively correlated with the priority level, if the transmission priority of the SL PRS is higher than the priority threshold, determine that the transmission priority of the SL PRS is higher than the other UL transmissions; or, if the transmission priority of the SL PRS is lower than the priority threshold, determine that the transmission priority of the SL PRS is lower than the other UL transmissions.

Optionally, other UL transmissions are PUSCH or PUCCH corresponding to non-priority specified indexes; or, other UL transmissions are PUSCH or PUCCH corresponding to the priority specified index, and the priority threshold is the SL priority threshold of the uplink ultra-reliable low-latency communication (UL-URLLC) service.

Optionally, the interface 1502 is further configured to receive priority information of the SL PRS transmission sent by a third device, where the third device is at least one of the second device, a positioning assistance device, or a network device; or,
optionally, the processor 1501 is further configured to determine priority information of the SL PRS transmission according to quality of service (QoS) information of a SL positioning service corresponding to the SL PRS transmission.

Optionally, the interface 1502 is further configured to receive the priority information of the SL PRS transmission and the priority information of the SL PRS reception sent by the third device; or,
optionally, the processor 1501 is further configured to determine, according to the QoS information, the priority information of the SL PRS transmission and the priority information of the SL PRS reception.

Optionally, the priority information of the SL PRS transmission includes at least one of the following information: the priority value and/or value range of the SL PRS transmission; the identification information (ID) of the SL PRS or the SL PRS set ID; the QoS information of the SL positioning service corresponding to the SL PRS; the priority information of each SL PRS ID or the priority information of each SL PRS set ID; the priority information of the SL PRS transmission and the priority information of the SL PRS reception.

Optionally, the SL PRS transmission includes SL PRS transmission and SL PRS reception, and the processor 1501 is further configured to determine at least one of a priority of the SL PRS transmission and a priority of the SL PRS reception.

Optionally, when the third device is the second device, the interface 1502 is further configured to perform signaling interaction with the second device through one of SL LPP message, SL interface PC5 -S message, RRC message and SCI, where the signaling interaction at least includes sending of priority information of the SL PRS transmission.

Optionally, when the third device is a positioning assistance device, the interface 1502 is further configured to perform signaling interaction with the positioning assistance device through LPP messages, where the signaling interaction at least includes sending of priority information of the SL PRS transmission.

Optionally, when the third device is a network device, the interface 1502 is further configured to perform signaling interaction with the network device through one of a system broadcast message, an RRC reconfiguration message, an RRC release message, downlink control information (DCI) and a media access control-control element (MAC CE) message, where the signaling interaction at least includes sending of priority information of the SL PRS transmission.

Optionally, the chip further includes a memory 1503, and the memory 1503 is used to store necessary computer programs and data.

In the embodiment of the present disclosure, priority information is set for SL PRS transmission, and SL PRS transmission is performed based on the priority information, so that SL PRS transmission is more accurate, which is conducive to improving the rationality of SL PRS transmission. Furthermore, when there is a transmission collision between SL PRS transmission and UL transmission, the transmission collision can be resolved based on the priority relationship between the two transmissions, that is, the risk of collision between SL PRS transmission and UL transmission is reduced. Moreover, it can be ensured that a transmission with a higher priority among the SL PRS transmission or the UL transmission is transmitted, which can reduce the packet loss.

Those skilled in the art may also understand that the various illustrative logical blocks and steps listed in the embodiments of the present disclosure may be implemented by electronic hardware, computer software, or a combination of hardware and software. Whether such functions are implemented by hardware or software depends on the specific application and the design requirements of the entire system. Those skilled in the art may use various methods to implement the functions described for each specific application, but such implementation should not be understood as exceeding the scope of protection of the embodiments of the present disclosure.

An embodiment of the present disclosure also provides a communication system, which includes the communication device as a terminal device and the communication device as a network device in the embodiment of Fig. 8 above, or the system includes the communication device as a terminal device and the communication device as a network device in the embodiment of Fig. 9 above.

The present disclosure also provides a readable storage medium having instructions stored thereon, which, when executed by a computer, implement the functions of any of the above method embodiments.

The present disclosure also provides a computer program product, which, when executed by a computer, implements the functions of any of the above method embodiments.

The above embodiments can be implemented in whole or in part by software, hardware, firmware or any combination thereof. When implemented by software, it can be implemented in whole or in part in the form of a computer program product. The computer program product includes one or more computer programs. When the computer program is loaded and executed on a computer, the process or function described in the embodiment of the present disclosure is generated in whole or in part. The computer can be a general-purpose computer, a special-purpose computer, a computer network, or other programmable device. The computer program can be stored in a computer-readable storage medium, or transmitted from one computer-readable storage medium to another computer-readable storage medium. For example, the computer program can be transmitted from a website site, computer, server or data center by wired (e.g., coaxial cable, optical fiber, digital subscriber line (DSL)) or wireless (e.g., infrared, wireless, microwave, etc.) mode to another website site, computer, server or data center. The computer-readable storage medium can be any available medium that can be accessed by a computer or a data storage device such as a server or data center integrated with one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)).

Those skilled in the art can understand that, the various numerical numbers such as first and second involved in the present disclosure are only used for distinction for convenience of description and are not used to limit the scope of the embodiments of the present disclosure, and also do not indicate the order of precedence.

At least one in the present disclosure may also be described as one or more, and a plurality may be two, three, four or more, which is not limited in the present disclosure. In the embodiments of the present disclosure, for a technical feature, the technical features in a kind of technical feature are distinguished by "first", "second", "third", "A", "B", "C" and "D", etc., and there is no order of precedence or size between the technical features described by the "first", "second", "third", "A", "B ", "C" and "D".

The corresponding relationship shown in the tables of the present disclosure can be configured or predefined. The values of the information in each table are only examples and can be configured as other values, which are not limited by the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adaptions can be made based on the above tables, such as splitting, merging, etc. The names of the parameters shown in the titles of the above tables can also be replaced with other names that can be understood by the communication device, and the values or representations of the parameters can also be other values or representations that can be understood by the communication device. When implementing the above tables, other data structures can also be used, such as arrays, queues, containers, stacks, linear lists, pointers, linked lists, trees, graphs, structures, classes, heaps, or hash tables.

The predefinition in the present disclosure may be understood as defined, predefined, stored, pre-stored, pre-negotiated, pre-configured, implemented as firmware, or pre-burned.

Those of ordinary skill in the art will appreciate that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Those skilled in the art can use different methods to implement the described functions for each specific application, but such implementation should not be considered as falling outside the scope of this disclosure.

Those skilled in the art can clearly understand that, for the convenience and brevity of description, for the specific working processes of the systems, devices and units described above, reference may be made to the corresponding processes in the aforementioned method embodiments, and a description thereof will not be repeated here.

The above is only specific implementations of the present disclosure, but the scope of the present disclosure is not limited thereto. Any person skilled in the art who is familiar with the technical field can easily think of changes or substitutions within the technical scope disclosed in the present disclosure, which should be included in the scope of the present disclosure. Therefore, the scope of the present disclosure should be based on the scope of the claims.

## Claims

1. A method for retransmitting a sidelink (SL) positioning reference signal (PRS), wherein the method is performed by a first device, and comprises:
after sending the SL PRS to a second device, retransmitting the SL PRS.

2. The method according to claim 1, wherein the retransmitting the SL PRS comprises any one of:
retransmitting the SL PRS according to SL PRS feedback information of the second device;
blindly retransmitting the SL PRS to the second device a preset number of times.

3. The method according to claim 1, wherein the retransmitting the SL PRS comprises:
determining a resource allocation mode of the first device;
in a case that the first device is in a resource allocation mode based on network scheduling, receiving a retransmission instruction signaling sent by a network device, and in a case that the retransmission instruction signaling instructs to retransmit the SL PRS, retransmitting the SL PRS by using transmission resources scheduled by a network;
in a case that the first device is in an autonomous resource allocation mode, retransmitting the SL PRS by using transmission resources autonomously selected by the first device.

4. The method according to claim 3, wherein the retransmitting the SL PRS based on the SL PRS feedback information of the second device comprises:
in a case that the first device is in the resource allocation mode based on network scheduling, receiving the SL PRS feedback information sent by the second device; and
sending the SL PRS feedback information to the network device.

5. The method according to claim 4, wherein the sending the SL PRS feedback information to the network device comprises:
determining configuration information of a physical uplink control channel (PUCCH) by the first device for an SL grant of the SL PRS;
sending the SL PRS feedback information to the network device through the PUCCH.

6. The method according to any one of claims 1 to 4, wherein the retransmitting the SL PRS based on the SL PRS feedback information of the second device comprises:
in a case that the first device is configured to enable an SL PRS feedback function, after sending the SL PRS, monitoring the SL PRS feedback information sent by the second device for the SL PRS; and
receiving the SL PRS feedback information through a physical sidelink feedback channel (PSFCH).

7. The method according to claim 6, further comprising:
determining whether the first device enables the SL PRS feedback function according to feedback function configuration information sent by a network device or pre-configuration information of the first device.

8. The method according to claim 6 or 7, further comprising any one of:
determining configuration information of the PSFCH for receiving the SL PRS feedback information based on configuration information of an SL PRS dedicated sending resource pool;
determining the configuration information of the PSFCH for receiving the SL PRS feedback information based on configuration information of an SL data sending resource pool of the first device, wherein the configuration information of the SL data sending resource pool comprises configuration information of a PSFCH for the SL PRS and configuration information of a PSFCH for SL data;
determining that the configuration information of the PSFCH for receiving the SL PRS feedback information is configuration information of a PSFCH for receiving the SL data based on the configuration information of the SL data sending resource pool of the first device.

9. The method according to any one of claims 6 to 8, further comprising:
sending sidelink control information (SCI) to the second device, wherein in a case that the first device is configured to enable the SL PRS feedback function, the SCI carries an indication instructing the second device to feed back the SL PRS feedback information.

10. The method according to claim 9, wherein in a case that the SL PRS is sent to the second device in a group cast mode, the SCI carries feedback mode indication information, and the feedback mode indication information comprises:
a positive-negative feedback mode;
a negative-only feedback mode.

11. The method according to claim 10, further comprising:
for the negative-only feedback mode, determining an SL zone length based on a transmission distance range of the SL PRS; and
determining a zone identifier based on the SL zone length.

12. The method according to claim 10 or 11, further comprising:
in a case that there are multiple second devices and a number of resources required by the multiple second devices is less than or equal to a number of PSFCH resources, selecting the positive-negative feedback mode or the negative-only feedback mode, and carrying configuration information of the selected feedback mode in the SCI;
in a case that there are multiple second devices and the number of resources required by the multiple second devices is greater than the number of PSFCH resources, carrying configuration information of the negative-only feedback mode in the SCI.

13. The method according to any one of claims 1 to 12, further comprising at least one of:
in response to receiving positive feedback information sent by the second device, not retransmitting the SL PRS; or
for a negative-only feedback mode, in response to not receiving negative feedback information sent by the second device, not retransmitting the SL PRS.

14. The method according to any one of claims 1 to 13, wherein the retransmitting the SL PRS based on the SL PRS feedback information of the second device comprises:
in response to receiving negative feedback information sent by the second device, in a case that a number of times for SL PRS retransmissions does not reach a maximum number of times for SL PRS retransmissions, retransmitting the SL PRS.

15. The method according to claim 14, further comprising any one of:
in a case that the first device is in an autonomous resource allocation mode, determining the maximum number of times for SL PRS retransmissions based on configuration information of an SL data sending resource pool of the first device;
determining the maximum number of times for SL PRS retransmissions based on configuration information of an SL PRS configured grant.

16. The method according to any one of claims 1 to 15, further comprising:
in a case that the first device is in an autonomous resource allocation mode, selecting transmission resources for SL PRS retransmission; and
determining a minimum time interval between any two transmission resources used for SL PRS retransmission.

17. The method according to claim 16, wherein the determining the minimum time interval between any two transmission resources used for SL PRS retransmission comprises any one of:
determining that the minimum time interval between any two transmission resources used for SL PRS retransmission is a time interval between an end position of a last symbol of transmission of the SL PRS and a start position of a first symbol of reception of a PSFCH;
determining that the minimum time interval between any two transmission resources used for SL PRS retransmission is a time required for PSFCH reception and processing plus an SL PRS retransmission preparation time and a switching time for switching from sending to receiving or for switching from receiving to sending.

18. The method according to any one of claims 1 to 17, further comprising:
in a case that the first device is in an autonomous resource allocation mode and the first device is configured to enable an SL PRS feedback function, selecting a sending resource pool configured with a PSFCH.

19. The method according to any one of claims 1 to 17, further comprising:
in a case that the first device is in an autonomous resource allocation mode, selecting a number of times for retransmissions from a maximum number of times for retransmission list indicated in an SL PRS resource pool configuration information; and
selecting one or more time-frequency resources for SL PRS retransmission based on the number of times for retransmissions.

20. A method for retransmitting a sidelink (SL) positioning reference signal (PRS), wherein the method is performed by a second device, and comprises:
after receiving the SL PRS sent by a first device, receiving the SL PRS retransmitted by the first device.

21. The method according to claim 20, further comprising:
receiving sidelink control information (SCI) sent by the first device, wherein in a case that the first device is configured to enable an SL PRS feedback function, the SCI carries an indication instructing the second device to feed back feedback information; and
in response to the SCI, sending the feedback information to the first device.

22. The method according to claim 21, further comprising:
in a case that the SL PRS is sent in a group cast mode, determining feedback mode indication information carried by the SCI, wherein the feedback mode indication information indicates a positive-negative feedback mode, and wherein,
in response to successfully receiving the SL PRS, sending positive feedback information to the first device;
in response to unsuccessfully receiving the SL PRS, sending negative feedback information to the first device.

23. The method according to claim 21, further comprising:
in a case that the SL PRS is sent in a unicast mode,
in response to successfully receiving the SL PRS, sending positive feedback information to the first device;
in response to unsuccessfully receiving the SL PRS, sending negative feedback information to the first device.

24. The method according to claim 21, further comprising:
determining feedback mode indication information carried by the SCI, wherein the feedback mode indication information indicates a negative-only feedback mode,
in response to unsuccessfully receiving the SL PRS, and when one of the following conditions is met, sending negative feedback information to the first device:
a distance between the second device and a center position of a nearest zone is less than a transmission distance range indicated in the SCI;
the SCI does not indicate a zone identifier and/or the transmission distance range;
location information of the second device is not available.

25. An apparatus for retransmitting a sidelink (SL) positioning reference signal (PRS), wherein the apparatus is applied to a first device, and comprises a transceiver module, and the transceiver module is configured to:
after sending the SL PRS to a second device, retransmit the SL PRS.

26. An apparatus for retransmitting a sidelink (SL) positioning reference signal (PRS), wherein the apparatus is applied to a second device, and comprises a transceiver module, and the transceiver module is configured to:
after receiving the SL PRS sent by a first device, receive the SL PRS retransmitted by the first device.

27. A communication device, comprising: a transceiver; a memory; and a processor, wherein the processor is connected to the transceiver and the memory respectively, and configured to, when executing computer executable instructions in the memory, control wireless signal reception and transmission of the transceiver, and implement the method according to any one of claims 1 to 24.

28. A computer-readable storage medium storing instructions, wherein the instructions, when executed, implement the method according to any one of claims 1 to 24.
